(19) Europäisches Patentamt
European Patent Office
Office européen des brevets

(11) EP 4 398 363 A1

(12) # EUROPEAN PATENT APPLICATION
published in accordance with Art. 153(4) EPC

(43) Date of publication:
**10.07.2024 Bulletin 2024/28**

(21) Application number: **22957633.5**

(22) Date of filing: **05.09.2022**

(51) International Patent Classification (IPC):
***H01M 10/0566*** *(2010.01)*

(52) Cooperative Patent Classification (CPC):
**H01M 10/0566**

(86) International application number:
**PCT/CN2022/116986**

(87) International publication number:
**WO 2024/050657 (14.03.2024 Gazette 2024/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
- **SUN, Jingxuan**
  **Ningde, Fujian 352100 (CN)**
- **LIU, Qian**
  **Ningde, Fujian 352100 (CN)**
- **LI, Quanguo**
  **Ningde, Fujian 352100 (CN)**
- **WU, Zeli**
  **Ningde, Fujian 352100 (CN)**
- **QIN, Yiming**
  **Ningde, Fujian 352100 (CN)**
- **CHEN, Jiahua**
  **Ningde, Fujian 352100 (CN)**
- **XIAO, Dejun**
  **Ningde, Fujian 352100 (CN)**

(74) Representative: **von Tietzen und Hennig, Nikolaus**
**Lorenz Seidler Gossel**
**Rechtsanwälte Patentanwälte**
**Partnerschaft mbB**
**Widenmayerstraße 23**
**80538 München (DE)**

(54) **IONIC COMPOUND, ELECTROLYTE, SECONDARY BATTERY AND ELECTRICAL DEVICE**

(57) The present application relates to an ionic compound, an electrolyte solution, a secondary battery and an electrical apparatus, wherein the ionic compound is represented by formula (1); wherein each $R_1$ is independently selected from alkyl having 1-10 carbon atoms substituted with fluorine or aryl having 6-30 carbon atoms substituted with fluorine, respectively; wherein any two adjacent $-OR_1$ groups and $A^-$ can form a ring through the carbon atom in each $R_1$ as a site of attachment; $A^-$ represents $B^-$ or $Si^-$, and $Y^+$ represents a sodium ion or a potassium ion. The ionic compound can improve the cycling performance of secondary batteries such as sodium-ion batteries and potassium-ion batteries.

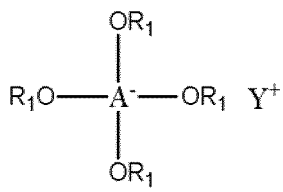

(1)

.

EP 4 398 363 A1

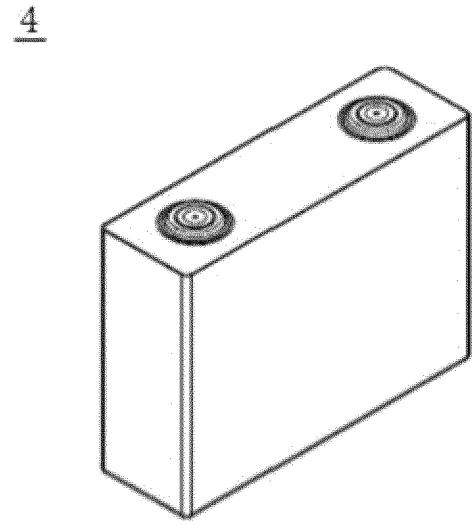


FIG. 1

## Description

### TECHNICAL FIELD

The present application relates to the field of batteries, and in particular to an ionic compound, an electrolyte solution, a secondary battery and an electrical apparatus.

### BACKGROUND

Secondary batteries have been widely used due to their clean and renewable characteristics. However, in order to meet the needs of different environments and application scenarios, the performance requirements for secondary batteries in the industry have continued to increase. In recent years, with the rapid development of new energy industry, the demand for new energy vehicles such as electric vehicles and electric bicycles is growing, and their performance requirements are also becoming higher and higher. As secondary batteries are important power sources for electric vehicles, the performance requirements for secondary batteries are also becoming higher and higher.

A secondary battery mainly relies on the movement of active ions between a positive electrode and a negative electrode to generate electric energy. During charging, the active ions are deintercalated from the positive electrode, and intercalated into the negative electrode through an electrolyte solution, and during discharging, the situation is just the opposite. Secondary batteries have the advantages of high energy density, low self-discharge, and excellent cycling performance, and with the increasingly scarce supply of lithium resources, secondary batteries with more abundant raw materials and lower costs such as sodium ion and potassium ion batteries have attracted attention.

However, the performance of sodium ion or potassium ion batteries is far from meeting the increasing expectations for the performance of secondary batteries, and conventional technologies still need to be improved.

### SUMMARY OF THE INVENTION

In view of the above-mentioned problems, the present application provides an ionic compound, an electrolyte solution, a secondary battery and an electrical apparatus, aiming at improving the cycling performance of secondary batteries such as sodium ion and potassium ion batteries.

In a first aspect of the present application, there is provided an ionic compound represented by formula (1):

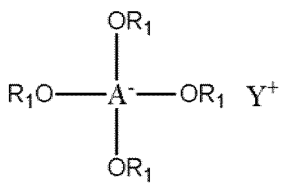

(1)

,

wherein each $R_1$ is independently selected from alkyl having 1-5 carbon atoms substituted with fluorine or aryl having 6-30 carbon atoms substituted with fluorine, respectively;
wherein any two adjacent $-OR_1$ groups and $A^-$ are capable of forming a ring, with a carbon atom in $R_1$ being a site of attachment;
$A^-$ represents $B^-$ or $Si^-$, and $Y^+$ represents a sodium ion or a potassium ion.

When the above-mentioned ionic compound is used as an electrolyte salt to prepare a secondary battery such as a sodium-ion or potassium-ion secondary battery, the infiltration rate of the electrolyte solution to the electrode and separator can be increased, the film formation impedance can be reduced, and the oxidation resistance is relatively good, so that the capacity utilization of the secondary battery can be improved, and in turn the cycling stability of the secondary battery can be improved.

In some of the examples, the ionic compound is represented by formula (1-1) or formula (1-2):

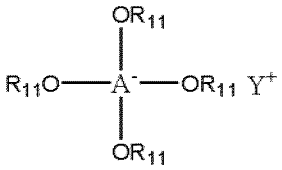

(1-1)

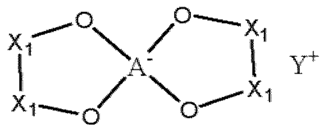

(1-2)

;

wherein each Rn is independently selected from alkanyl having 1-10 carbon atoms substituted with fluorine, cycloalkyl having 3-10 carbon atoms substituted with fluorine or aryl having 6-30 carbon atoms substituted with fluorine, respectively;

each $X_1$ is independently selected from $CR_{12}R_{12}$, respectively, and each $R_{12}$ is independently selected from F, or alkanyl having 1-5 carbon atoms, or cycloalkyl having 3-10 carbon atoms, or aryl having 6-30 carbon atoms, or alkanyl having 1-5 carbon atoms substituted with fluorine, or cycloalkyl having 3-10 carbon atoms substituted with fluorine, or aryl having 6-30 carbon atoms substituted with fluorine, respectively, and at least one $X_1$ contains a fluorine atom.

In some of the examples, each Rn is independently selected from alkanyl having 1-4 carbon atoms substituted with fluorine, cycloalkyl having 3-6 carbon atoms substituted with fluorine or aryl having 6-15 carbon atoms substituted with fluorine, respectively;
each $R_{12}$ is independently selected from alkanyl having 1-5 carbon atoms substituted with fluorine, or cycloalkyl having 3-6 carbon atoms substituted with fluorine or aryl having 6-30 carbon atoms substituted with fluorine, respectively.

In some of the examples, in formula (1-1), at least one Rn is selected from cycloalkyl having 3-6 carbon atoms substituted with fluorine or aryl having 6-15 carbon atoms substituted with fluorine;
in formula (1-2), at least one $R_{12}$ is selected from cycloalkyl having 3-6 carbon atoms substituted with fluorine or aryl having 6-15 carbon atoms substituted with fluorine.

Compared with chain groups, cycloalkyl groups are easier to be reduced during the formation process, and can more preferentially participate in the film formation process of SEI film, especially for anodic protection, the effect is better, which can further improve the cycling stability of the secondary battery; while the aryl structure is easy to be oxidized to form a film during the first charging process, which has a better cathodic protection effect, and can also further improve the cycling stability of the secondary battery.

In some of the examples, the cycloalkyl having 3-6 carbon atoms substituted with fluorine satisfies at least one of the conditions (a)-(b):

(a) the cycloalkyl having 3-6 carbon atoms substituted with fluorine has a molecular weight of not more than 200g/mol;
(b) the cycloalkyl having 3-6 carbon atoms substituted with fluorine is selected from any one of cyclopropanyl substituted with fluorine, cyclobutanyl substituted with fluorine, cyclopentanyl substituted with fluorine, and cyclohexanyl substituted with fluorine.

The structure of fluorine-substituted cycloalkyl having 3-6 carbon atoms is further regulated, so that it has a smaller solvation radius, thereby reducing the viscosity of the electrolyte solution, and increasing the conductivity of the electrolyte solution, thus further improving the dynamic performance of the secondary battery.

In some of the examples, the aryl having 6-15 carbon atoms substituted with fluorine is selected from any one of phenyl substituted with fluorine and naphthyl substituted with fluorine.

In some of the examples, each $R_{11}$ at least contains one fluorine atom;

optionally, each $R_{11}$ at least contains two fluorine atoms;
optionally, each $R_{11}$ at least contains three fluorine atoms.

In some of the examples, each $R_{12}$ at least contains one fluorine atom;

optionally, each $R_{12}$ at least contains two fluorine atoms;
optionally, each $R_{12}$ at least contains three fluorine atoms.

Fluorine atoms are in favor of increasing the infiltration rate of the electrolyte solution to the electrode and separator.

In some of the examples, $Y^+$ is sodium ion.

In a second aspect of the present application, there is provide a use of the ionic compound of the first aspect as an electrolyte salt.

In some of the examples, the use is the use of the ionic compound as an electrolyte salt in the preparation of a secondary battery.

In a third aspect of the present application, there is provided an electrolyte solution, having a component comprising the ionic compound of the first aspect.

In some of the examples, the concentration of the ionic compound is 0.3mol/L-1.4mol/L;

Optionally, the concentration of the ionic compound is 0.9mol/L-1.3mol/L.

In some of the examples, the conductivity of the electrolyte solution at 25 °C is 6mS/cm-14mS/cm; optionally, the conductivity of the electrolyte solution at 25 °C is 6.5mS/cm-13mS/cm.

In a fourth aspect of the present application, there is provided a secondary battery comprising the electrolyte solution of the third aspect.

In a fifth aspect of the present application, there is provided an electrical apparatus comprising the secondary battery of the fourth aspect.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific embodiments of the present application are exemplified below.

## DESCRIPTION OF DRAWINGS

Various other advantages and benefits will become apparent to those of ordinary skill in the art upon reading the following detailed description of the preferred embodiments. The drawings are for the purpose of illustrating the preferred embodiments only and are not considered to be a limitation to the present application. Also, the same reference numerals are used to denote the same components throughout the drawings. In the drawings:

Fig. 1 is a schematic view of an embodiment of a secondary battery.
Fig. 2 is an exploded view of Fig. 1.
Fig. 3 is a schematic view of an embodiment of a battery pack.
Fig. 4 is an exploded view of Fig. 3.
Fig. 5 is a schematic view of an embodiment of an electrical apparatus using a secondary battery as a power source.

Description of reference numerals:

1. battery pack; 2. upper box body; 3. lower box body; 4. secondary battery; 41. case; 42. electrode assembly; 43. cover plate; 5. electrical apparatus.

## DETAILED DESCRIPTION

Examples of the technical solutions of the present application will be described in detail below in conjunction with the drawings. The following examples are only used to more clearly illustrate the technical solutions of the present application, and are therefore only illustrative, and are not intended to limit the protection scope of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "comprising" and "having" and any variations thereof in the specification and the claims of the present application and in the above description of drawings are intended to cover non-exclusive inclusion.

In the description of the examples of the present application, the technical terms "first", "second", and the like are used only to distinguish between different objects, and are not to be understood as indicating or implying a relative importance or implicitly specifying the number, particular order, or primary and secondary relation of the technical features indicated. In the description of the examples of the present application, the meaning of "a plurality" is two or more, unless otherwise explicitly and specifically defined.

Reference herein to "an example" means that a particular feature, structure, or characteristic described in connection with the example can be included in at least one example of the present application. The appearance of this phrase in various places in the specification does not necessarily refer to the same example, nor is it a separate or alternative example that is mutually exclusive with other examples. It is explicitly and implicitly understood by those skilled in the art that the examples described herein may be combined with other examples.

In the description of the examples of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the examples of the present application, the term "a plurality" refers to two or more (including two), and similarly, "multiple groups" refers to two or more (including two) groups, and "multiple sheets" refers to two or more (including two) sheets.

In the description of the examples of the present application, the orientation or position relationship indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or position relationship shown in the drawings and are intended to facilitate the description of the examples of the present application and simplify the description only, rather than indicating or implying that the device or element referred to must have a particular orientation or be constructed and operated in a particular orientation, and therefore are not to be construed as limitations on the examples of the present application.

In the description of the examples of the present application, unless otherwise expressly specified and limited, the technical terms "mount", "join", "connect", "fix", etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the examples of the present application can be understood according to specific situations.

In the present application, the term "alkyl" refers to a group formed when an alkane loses one hydrogen, for example, methane loses one hydrogen to form a methyl group.

The term "alkanyl" refers to an alkane, in which all carbon atoms are connected by carbon-carbon single bonds and do not form a ring, and the remaining valence bonds are bound to hydrogen, including linear alkane and branched alkane.

In the present invention, the number of carbon atoms of "alkyl" can be from 1 to 10, including 1, 2, 3, 4, 5, 6, 7, 8, 9 or 10, which refers to a group formed when an alkane containing 1-10 carbon atoms (i.e., a C1-10 alkane) loses one hydrogen, and specific examples include a group formed when a C1 alkane, a C2 alkane, a C3 alkane, a C4 alkane, a C5 alkane, a C6 alkane, a C7 alkane, a C8 alkane, a C9 alkane or a C10 alkane loses one hydrogen. Non-limiting examples of "alkyl having 1-10 carbon atoms" include methanyl, ethanyl, n-propanyl, isopropanyl, n-butanyl, isobutanyl, 2-ethylbutanyl, 3,3-dimethylbutanyl, n-pentanyl, isopentanyl, neopentanyl, 1-methylpentanyl, 3-methylpentanyl, 2-ethylpentanyl, 4-methyl-2-pentanyl, n-hexanyl, 1-methylhexanyl, 2-ethylhexanyl, 2-butylhexanyl, n-heptanyl, 1-methylheptanyl, 2,2-dimethylheptanyl, 2-ethylheptanyl, n-octanyl, n-nonanyl, and n-decanyl.

"Aryl" refers to a hydrocarbon group containing at least one aromatic ring, including non-fused ring aryl and fused ring aryl. Fused ring aryl refers to a group formed by joining two or more aromatic rings through two shared adjacent ring atoms, that is, a fused ring.

In the present application, when a site of attachment is not specified in a group, it means that an optional site that is attachable in the group is used as the site of attachment.

As mentioned in the background, conventional technologies have been focused on the research of lithium-ion batteries. As potassium ions or sodium ions have an ionic radius larger than that of lithium ions, they cannot be intercalated into graphite materials, hard carbon or other negative electrode materials are needed, and the energy density is lower than that of graphite materials, which results in limited battery performance, and those skilled in the art generally believe that the performance of sodium-ion or potassium-ion batteries cannot reach the performance of lithium-ion batteries.

While with the increasingly scarce supply of lithium resources, secondary batteries with more abundant raw materials and lower costs such as sodium ion and potassium ion batteries have attracted attention. However, there are few studies on sodium-ion and potassium-ion batteries in conventional technologies, and the performance of sodium-ion or potassium-ion batteries is far from meeting the increasing expectations for the performance of secondary batteries.

Those skilled in the present application have found in the course of many years of actual production and research that: a conventional sodium-ion battery uses a sodium salt as the electrolyte, such as $NaPF_6$, which has a stronger hygroscopicity, and during charging and discharging in the sodium-ion battery, the sodium salt such as $NaPF_6$ is prone to decompose and produce by-products, which leads to an increase of the impedance of the sodium-ion battery, resulting in a decrease of the cycling stability. Based on this, on the basis of summarizing the conventional lithium-ion battery technologies, those skilled in the present application have accidentally found that: the performance of a sodium-ion battery can be further improved by learning from the electrolyte structure in some lithium-ion batteries, and after a large number of creative exploratory experiments and structural designs, an ionic compound which can improve the reduced impedance and cycling stability of a sodium-ion or potassium-ion battery in the present application is obtained.

An embodiment of the present application provides an ionic compound represented by formula (1):

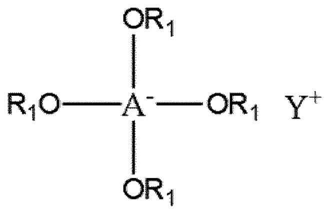

(1)

,

wherein each $R_1$ is independently selected from alkyl having 1-10 carbon atoms substituted with fluorine or aryl having 6-30 carbon atoms substituted with fluorine, respectively;
wherein any two adjacent $-OR_1$ groups and $A^-$ are capable of forming a ring, with a carbon atom in $R_1$ being a site of attachment;
$A^-$ represents $B^-$ or $Si^-$, and $Y^+$ represents a sodium ion or a potassium ion.

When the above-mentioned ionic compound is used as an electrolyte salt to prepare a secondary battery such as a sodium-ion or potassium-ion secondary battery, the infiltration rate of the electrolyte solution to the electrode and separator can be increased, the film formation impedance can be reduced, and the oxidation resistance is relatively good, so that the capacity utilization of the secondary battery can be improved, and in turn the cycling stability of the secondary battery can be improved.

In some of the examples, the above-mentioned ionic compound is represented by formula (1-1) or formula (1-2):

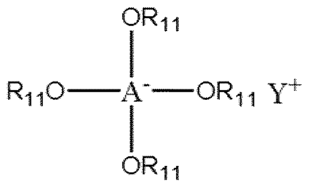

(1-1)

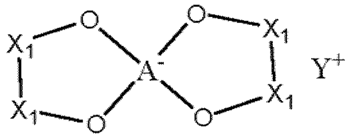

(1-2)

;

wherein each Rn is independently selected from alkanyl having 1-5 carbon atoms substituted with fluorine, cycloalkyl having 3-10 carbon atoms substituted with fluorine or aryl having 6-30 carbon atoms substituted with fluorine, respectively;
each $X_1$ is independently selected from $CR_{12}R_{12}$, respectively, and each $R_{12}$ is independently selected from F, or alkanyl having 1-5 carbon atoms, or cycloalkyl having 3-10 carbon atoms, or aryl having 6-30 carbon atoms, or alkanyl having 1-5 carbon atoms substituted with fluorine, or cycloalkyl having 3-10 carbon atoms substituted with fluorine, or aryl having 6-30 carbon atoms substituted with fluorine, respectively, and at least one $X_1$ contains a fluorine atom.

In some of the examples, each Rn is independently selected from alkanyl having 1-4 carbon atoms substituted with fluorine, cycloalkyl having 3-6 carbon atoms substituted with fluorine or aryl having 6-15 carbon atoms substituted with fluorine, respectively.

In some of the examples, each $R_{11}$ is independently selected from linear alkyl having 1-4 carbon atoms substituted with fluorine, branched alkyl having 1-4 carbon atoms substituted with fluorine, cycloalkyl having 3-6 carbon atoms substituted with fluorine or aryl having 6-15 carbon atoms substituted with fluorine, respectively.

In some of the examples, each $R_{11}$ is independently selected from linear alkyl having 1-4 carbon atoms substituted with fluorine, branched alkyl having 1-4 carbon atoms substituted with fluorine, cycloalkyl having 3-6 carbon atoms substituted with fluorine or aryl having 6-15 carbon atoms substituted with fluorine, respectively.

In some of the examples, in formula (1-1), at least one Rn is selected from cycloalkyl having 3-6 carbon atoms substituted with fluorine or aryl having 6-15 carbon atoms substituted with fluorine.

As cycloalkyl groups are easier to be reduced during the formation process, and preferentially participate in the film formation process of SEI film, especially for anodic protection, the effect is better, the cycling stability of the secondary battery can be further improved; while the aryl structure is easy to be oxidized to form a film during the first charging process, which has a better cathodic protection effect, and can also further improve the cycling stability of the secondary battery.

In some of the examples, the above-mentioned cycloalkyl having 3-6 carbon atoms substituted with fluorine has a molecular weight of not more than 200g/mol.

Optionally, the above-mentioned cycloalkyl having 3-6 carbon atoms substituted with fluorine has a molecular weight of 20g/mol-180g/mol.

Optionally, the above-mentioned cycloalkyl having 3-6 carbon atoms substituted with fluorine has a molecular weight of 20g/mol-100g/mol.

The structure of fluorine-substituted cycloalkyl having 3-6 carbon atoms is further regulated, so that it has a smaller solvation radius, thereby reducing the viscosity of the electrolyte solution, and increasing the conductivity of the electrolyte solution, thus further improving the dynamic performance of the secondary battery.

In some of the examples, each $R_{12}$ is independently selected from alkanyl having 1-10 carbon atoms substituted with fluorine, or cycloalkyl having 3-10 carbon atoms substituted with fluorine, or aryl having 6-30 carbon atoms substituted with fluorine, respectively.

In some of the examples, in formula (1-2), at least one $R_{12}$ is selected from cycloalkyl having 3-6 carbon atoms substituted with fluorine or aryl having 6-15 carbon atoms substituted with fluorine.

As cycloalkyl groups are easier to be reduced during the formation process, and preferentially participate in the film formation process of SEI film, especially for anodic protection, the effect is better, the cycling stability of the secondary battery can be further improved; while the aryl structure is easy to be oxidized to form a film during the first charging process, which has a better cathodic protection effect, and can also further improve the cycling stability of the secondary battery.

In some of the examples, the above-mentioned cycloalkyl having 3-6 carbon atoms substituted with fluorine is selected from any one of cyclopropanyl substituted with fluorine, cyclobutanyl substituted with fluorine, cyclopentanyl substituted with fluorine, and cyclohexanyl substituted with fluorine.

In some of the examples, the above-mentioned aryl having 6-15 carbon atoms substituted with fluorine is selected from any one of phenyl substituted with fluorine and naphthyl substituted with fluorine.

In some of the examples, the above-mentioned cycloalkyl having 3-6 carbon atoms substituted with fluorine is selected from any one of cyclopropanyl substituted with fluorine, cyclobutanyl substituted with fluorine, cyclopentanyl substituted with fluorine, and cyclohexanyl substituted with fluorine.

In some of the examples, each Rn is independently selected from any one of methyl substituted with fluorine, ethyl substituted with fluorine, n-propyl substituted with fluorine, isopropyl substituted with fluorine, n-butyl substituted with fluorine, isobutyl substituted with fluorine, cyclopropanyl substituted with fluorine, cyclobutanyl substituted with fluorine, cyclopentanyl substituted with fluorine, cyclohexanyl substituted with fluorine, phenyl substituted with fluorine and naphthyl substituted with fluorine, respectively.

Each Rn may be the same or different.

In some of the examples, each Rn is the same.

In some of the examples, at least one Rn is selected from any one of cyclopropanyl substituted with fluorine, cyclobutanyl substituted with fluorine, cyclopentanyl substituted with fluorine, cyclohexanyl substituted with fluorine, phenyl substituted with fluorine and naphthyl substituted with fluorine.

In some of the examples, each $R_{12}$ is independently selected from any one of methyl substituted with fluorine, ethyl substituted with fluorine, n-propyl substituted with fluorine, isopropyl substituted with fluorine, n-butyl substituted with fluorine, isobutyl substituted with fluorine, cyclopropanyl substituted with fluorine, cyclobutanyl substituted with fluorine, cyclopentanyl substituted with fluorine, cyclohexanyl substituted with fluorine, phenyl substituted with fluorine and naphthyl substituted with fluorine, respectively.

Each $R_{12}$ may be the same or different.

In some of the examples, each $R_{12}$ is the same.

In some of the examples, at least one $R_{12}$ is selected from any one of cyclopropanyl substituted with fluorine, cyclobutanyl substituted with fluorine, cyclopentanyl substituted with fluorine, cyclohexanyl substituted with fluorine, phenyl substituted with fluorine and naphthyl substituted with fluorine.

In some of the examples, each $R_{11}$ at least contains one fluorine atom.

Optionally, each $R_{11}$ at least contains two fluorine atoms.

Optionally, each $R_{11}$ at least contains three fluorine atoms.

In some of the examples, each $R_{12}$ at least contains one fluorine atom;

Optionally, each $R_{12}$ at least contains two fluorine atoms.

Optionally, each $R_{12}$ at least contains three fluorine atoms.

Fluorine atoms are in favor of increasing the infiltration rate of the electrolyte solution to the electrode and separator.

In some of the examples, each $R_{11}$ mentioned above has a molecular weight of 10 g/mol - 200g/mol; and optionally, each $R_{11}$ has a molecular weight of 20 g/mol -180 g/mol.

In some of the examples, each $R_{12}$ mentioned above has a molecular weight of 10 g/mol - 200g/mol; and

optionally, each $R_{12}$ has a molecular weight of 20 g/mol -180 g/mol.

If the molecular weight of $R_{11}$ or $R_{12}$ is too large, the chain is too long and easy to decompose, and side reactions are prone to occur. If the molecular weight is too small or the chain is too short, the oxidizability will be insufficient, and the solvation rate will be reduced.

In some of the examples, $A^-$ is $B^-$ or $Si^-$, and $Y^+$ is sodium ion.

When $A^-$ is $Si^-$, the contained Si-O bond is more likely to react with $H_2O$ and HF in the electrolyte solution, thus achieving acid suppression and reducing the corrosion of the interface film on the surfaces of the positive electrode and negative electrode.

The above-mentioned ionic compound can be prepared with reference to the preparation method of boranyloxy ionic compound commonly used in the art, and its preparation method is illustrated here:

When $A^-$ is $B^-$, the preparation process is as follows:

Sodium borohydride or potassium borohydride is reacted with Rn-OH in a solvent to obtain an ionic compound represented by formula (1-1).

Specifically, the above-mentioned solvent is 1,2-dimethoxyethane (DME), and the reaction condition is: heating to reflux for 6 hours, and the post-processing steps include: cooling the system after the reaction is completed, and stirring at 50°C for 16 hours, then removing the solvent to obtain a concentrated crude product, and then using pentane to precipitate a salt from the concentrated crude product and purify to obtain the ionic compound.

When $A^-$ is $Si^-$, the preparation process is as described above, except that the above-mentioned sodium borohydride or potassium borohydride is replaced by orthosilicic acid.

An embodiment of the present application further provides a use of the above-mentioned ionic compound as an electrolyte salt.

In some of the examples, the above-mentioned use is the use of the ionic compound as an electrolyte salt in the preparation of a secondary battery.

When the above-mentioned ionic compound is used as an electrolyte salt to prepare a secondary battery such as a sodium-ion or potassium-ion secondary battery, the infiltration rate of the electrolyte solution to the electrode and separator can be increased, the film formation impedance can be reduced, and the oxidation resistance is relatively good, so that the capacity utilization of the secondary battery can be improved, and in turn the cycling stability of the secondary battery can be improved.

In some of the examples, the above-mentioned secondary battery is a sodium-ion battery or a potassium-ion battery.

An embodiment of the present application further provides an electrolyte solution, having a component comprising the above-mentioned ionic compound.

In some of the examples, the concentration of the above-mentioned ionic compound is 0.3mol/L-1.4mol/L.

Optionally, the concentration of the above-mentioned ionic compound is 0.9mol/L-1.3mol/L.

If the concentration of the ionic compound is too high, it will lead to an increase in gas evolution, and if it is too low, it will lead to a decrease in the conductivity of the electrolyte solution, resulting in an increase in the impedance of the secondary battery.

In some of the examples, the conductivity of the electrolyte solution at 25 °C is 6mS/cm-14mS/cm.

Optionally, the conductivity of the above-mentioned electrolyte solution at 25 °C is 6.5mS/cm-13mS/cm.

Optionally, the conductivity of the above-mentioned electrolyte solution at 25 °C is 6.5mS/cm-13mS/cm.

The components of the above-mentioned electrolyte solution further comprise an organic solvent, and the organic solvent can be selected from electrolyte solvents commonly used in the art: including one or more of ethylene carbonate (EC), dimethyl carbonate (DMC), diethyl carbonate (DEC) and ethyl methyl carbonate (EMC).

Further, the components of the above-mentioned electrolyte solution further comprise an additive, including one or more of fluoroethylene carbonate (FEC), ethylene sulfate (DTD), 1,3-propane sultone (PS), 1,3-propenyl-sultone (PST), succinic anhydride (SA), lithium difluoro (oxalato)borate (LiDFOB), lithium difluorobis (oxalato) phosphate (LiDFOP), tris(trimethylsilyl) borate (TMSB), and the like.

Further, the above-mentioned additive may further comprise a negative electrode film-forming additive, or a positive electrode film-forming additive, or an additive capable of improving certain performances of the battery, such as an additive for improving the overcharging performance of the battery, an additive for improving the high temperature performance of the battery, an additive for improving the low temperature performance of the battery, etc.

An embodiment of the present application further provides a secondary battery, comprising the above-mentioned electrolyte solution.

The secondary battery is a sodium-ion battery or a potassium-ion battery.

Further, the above-mentioned secondary battery further comprises a positive electrode sheet, a negative electrode sheet and a separator.

[Positive electrode sheet]

The positive electrode sheet comprises a positive electrode current collector and a positive electrode active layer supported on a surface of the positive electrode current collector.

The positive electrode active layer has a component comprising a positive electrode active material.

In some of the examples, the mass proportion of the positive electrode active material in the positive electrode active layer is 70%-100%.

In some embodiments, the positive electrode active material may be a positive electrode active material for secondary batteries known in the art.

In any embodiment of the present application, the positive electrode active material comprises any one of a sodium ion positive electrode active material and a potassium ion positive electrode active material.

By way of example, the sodium ion positive electrode active material may comprise at least one of the following materials: a sodium transition metal oxide, a polyanionic compound, and a prussian blue-based compound. However, the present application is not limited to these materials, and other conventionally known materials that can be used as positive electrode active materials for sodium-ion batteries can also be used.

In any embodiment of the present application, the positive electrode active material comprises at least one of a sodium transition metal oxide, a polyanionic compound, and a prussian blue-based compound;
Optionally, the positive electrode active material comprises at least one of a sodium transition metal oxide and a polyanionic compound.

The sodium transition metal oxide has a layered transition metal structure, and compared with the rhombohedral phase of prussian blue-based compounds, theoretically the thickness rebound ratio of the layered transition metal structure will be greater. However, in practical application, prussian blue-based compounds easily absorb water to form crystal water and vacancy defects, resulting in an increase of the thickness rebound ratio and even collapse of the structure. Therefore, when a sodium transition metal oxide is used as the positive electrode active material, the thickness rebound ratio of the positive electrode sheet is even smaller.

The anionic structural units in the polyanionic compound are covalently bonded to form a three-dimensional structure, which has good structural stability, and when it is used as the positive electrode active material, the thickness rebound ratio of the positive electrode sheet is relatively low.

As an optional technical solution of the present application, in the sodium transition metal oxide, the transition metal at least comprises at least one of Mn, Fe, Ni, Co, Cr, Cu, Ti, Zn, V, Zr and Ce. The sodium transition metal oxide is, for example, $Na_xMO_2$, wherein M at least comprises one or more of Ti, V, Mn, Co, Ni, Fe, Cr and Cu, and $0<x\leq1$.

As an optional technical solution of the present application, the polyanionic compound may be a type of compound having a sodium ion, a transition metal ion and a tetrahedral $(YO_4)^{n-}$ anion unit. The transition metal at least comprises at least one of Mn, Fe, Ni, Co, Cr, Cu, Ti, Zn, V, Zr and Ce; Y at least comprises at least one of P, S and Si; and n represents the valence state of $(YO_4)^{n-}$.

The polyanionic compound may also be a type of compound having a sodium ion, a transition metal ion, a tetrahedral $(YO_4)^{n-}$ anion unit and a halogen anion. The transition metal at least comprises at least one of Mn, Fe, Ni, Co, Cr, Cu, Ti, Zn, V, Zr and Ce; Y at least comprises at least one of P, S and Si, n represents the valence state of $(YO_4)^{n-}$; and the halogen may be at least one of F, Cl and Br.

The polyanionic compound may also be a type of compound having a sodium ion, a tetrahedral $(YO_4)^{n-}$ anion unit, a polyhedral unit $(ZO_y)^{m+}$ and an optional halogen anion. Y at least comprises at least one of P, S and Si, n represents the valence state of $(YO_4)^{n-}$; Z represents a transition metal, at least including at least one of Mn, Fe, Ni, Co, Cr, Cu, Ti, Zn, V, Zr and Ce, m represents the valence state of $(ZO_y)^{m+}$; and the halogen may be at least one of F, Cl and Br.

The polyanionic compound is, for example, at least one of $NaFePO_4$, $Na_3V_2(PO_4)_3$ (sodium vanadium phosphate, abbreviated as NVP), $Na_4Fe_3(PO_4)_2(P_2O_7)$, $NaM'PO_4F$ (M' is one or more of V, Fe, Mn and Ni), and $Na_3(VO_y)_2(PO_4)_2F_{3-2y}$ ($0\leq y\leq1$).

The prussian blue-based compound may be a type of compound having a sodium ion, a transition metal ion and a cyanide ion ($CN^-$). The transition metal at least comprises at least one of Mn, Fe, Ni, Co, Cr, Cu, Ti, Zn, V, Zr and Ce. The prussian blue-based compound is, for example, $Na_aMe_bMe'_c(CN)_6$, wherein Me and Me' each independently at least comprise at least one of Ni, Cu, Fe, Mn, Co and Zn, with $0<a\leq2$, $0<b<1$, and $0<c<1$.

In any embodiment of the present application, the components of the positive electrode active layer further comprise a positive electrode binder, and the mass proportion of the positive electrode binder in the positive electrode active layer is 0.05%-10%.

Optionally, the mass proportion of the positive electrode binder in the positive electrode active layer is 0.1%-8%.

Various types of binders commonly used in the art can be used as the positive electrode binder. By way of example, the positive electrode binder comprises at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorinated acrylate resin, sodium carboxymethyl cellulose, hydroxypropyl cellulose, sodium hydroxymethyl cellulose, potassium hydroxymethyl cellulose, diacetyl cellulose, polyacrylic acid, sodium alginate, styrene butadiene rubber, acrylic butadiene rubber, polypyrrole, polyaniline and epoxy resin, and guar gum.

In any embodiment of the present application, the components of the positive electrode active layer further comprise a positive electrode conductive agent, and the mass proportion of the positive electrode conductive agent in the positive electrode active layer is 0.05%-8%.

Optionally, the mass proportion of the positive electrode conductive agent in the positive electrode active layer is 0.1%-6%.

By way of example, the positive electrode conductive agent may comprise at least one of superconducting carbon, acetylene black, carbon black, Ketjen black, carbon dots, carbon nanotubes, graphene, and carbon nanofibers.

The positive electrode current collector may be a metal foil or a composite current collector. For example, a copper foil can be used as the metal foil. The composite current collector may comprise a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on the high molecular material substrate (such as polypropylene (PP), polyethylene terephthalate (PET), polybutylene terephthalate (PBT), polystyrene (PS), and polyethylene (PE)).

In some embodiments, the positive electrode sheet can be prepared by dispersing the above-mentioned components for preparing the positive electrode sheet, for example, the positive electrode active material, the positive electrode conductive agent, the positive electrode binder and any other components in a solvent (for example, N-methyl pyrrolidone) to form a positive electrode slurry; and coating the positive electrode slurry on a positive electrode current collector, followed by oven drying, cold pressing and other procedures, to obtain the positive electrode sheet.

[Negative electrode sheet]

The negative electrode sheet comprises a negative electrode current collector and a negative electrode active layer supported on a surface of the negative electrode current collector, and the negative electrode active layer has a component comprising a negative electrode active material.

In any embodiment of the present application, the mass proportion of the negative electrode active material in the negative electrode active layer is 85%-99%.

Optionally, the mass proportion of the negative electrode active material in the negative electrode active layer is 90%-99%.

The negative electrode active material may be a carbon material or a silicon-based material known in the art for secondary batteries. By way of example, in some examples, the negative electrode active material comprises at least one of carbon nanotubes, graphite, graphene, carbon fibers, mesocarbon microbeads, glassy carbon, soft carbon, and hard carbon. Among them, the graphite comprises at least one of an artificial graphite and a natural graphite, and specifically, the graphite may be an expanded graphite, a highly oriented graphite, a three-dimensional graphite, and the like. However, the present application is not limited to these materials. The above-mentioned negative electrode active materials may be used alone or in combination of two or more thereof.

In any embodiment of the present application, the negative electrode active material comprises a silicon-based material, and further, the weight proportion of the silicon-based material in the negative electrode active material is ≤40%; and preferably, the weight proportion of the silicon-based material in the negative electrode active material is 15%-30%.

In any embodiment of the present application, the components of the negative electrode active layer comprise a negative electrode binder, and the mass proportion of the negative electrode binder in the negative electrode active layer is 0.1%-10%.

The negative electrode binder comprises at least one of sodium carboxymethyl cellulose, hydroxypropyl cellulose, sodium hydroxymethyl cellulose, potassium hydroxymethyl cellulose, diacetyl cellulose, polyacrylic acid, sodium alginate, styrene butadiene rubber, acrylic butadiene rubber, polypyrrole, polyaniline, epoxy resin and guar gum. Such a binder has a low swelling ratio, and can further reduce the thickness rebound ratio of the negative electrode sheet.

In any embodiment of the present application, the components of the negative electrode active layer further comprise a negative electrode conductive agent, and the mass proportion of the negative electrode conductive agent in the negative electrode active layer is 0.1%-10%.

Optionally, the mass proportion of the negative electrode conductive agent in the negative electrode active layer is 0.15%-8%.

By way of example, the negative electrode conductive agent may comprise at least one of superconducting carbon, acetylene black, carbon black, Ketjen black, carbon dots, carbon nanotubes, graphene, and carbon nanofibers.

The negative electrode current collector may be a metal foil or a composite current collector. For example, a copper foil can be used as the metal foil. The composite current collector may comprise a high molecular material substrate layer and a metal layer formed on at least one surface of the high molecular material substrate. The composite

current collector can be formed by forming a metal material (copper, copper alloy, nickel, nickel alloy, titanium, titanium alloy, silver and silver alloy, etc.) on the high molecular material substrate (such as polypropylene (PP), polyethylene terephthalate (PET), polybutylene terephthalate (PBT), polystyrene (PS), and polyethylene (PE)).

In some embodiments, the negative electrode sheet can be prepared by dispersing the above-mentioned components for preparing the negative electrode sheet, for example, the negative electrode active material, the negative electrode conductive agent, the negative electrode binder and any other components in a solvent (for example, N-methyl pyrrolidone) to form a negative electrode slurry; and coating the negative electrode slurry on a negative electrode current collector, followed by oven drying, cold pressing and other procedures, to obtain the negative electrode sheet.

The positive electrode sheet, the negative electrode sheet and the separator can be made into an electrode assembly by a winding process or a lamination process. The electrolyte solution serves to conduct ions between the positive electrode and the negative electrode.

The type of the separator is not particularly limited in the present application, and any well-known separator with a porous structure having good chemical stability and mechanical stability may be selected.

In some embodiments, the material of the separator can be selected from at least one of glass fiber, non-woven cloth, polyethylene, polypropylene and polyvinylidene fluoride, and it can also be a separator with a boehmite-based coating, i.e. comprising a porous substrate and a boehmite coating supported on the surface of the porous substrate. The separator may be a single-layer film or a multi-layer composite film, which is not particularly limited. When the separator is a multi-layer composite film, the material of each layer may be the same or different, which is not particularly limited.

The thickness of the separator is controlled to be 2μm -15μm; and optionally, the thickness of the separator is controlled to be 2μm-13μm.

The present application has no particular limitation on the shape of the secondary battery, which can be cylindrical, square or any other shape. For example, Fig. 1 shows a secondary battery 4 with a square structure as an example.

In some examples, referring to Fig. 2, a housing may comprise a case 41 and a cover plate 43. Here, the case 41 may comprise a bottom plate and a side plate attached to the bottom plate, wherein the bottom plate and the side plate are enclosed to form an accommodating cavity. The case 41 has an opening that communicates with the accommodating cavity, and the cover plate 43 can cover the opening to close the accommodating cavity.

The positive electrode sheet, the negative electrode sheet and the separator can be wound or laminated to form an electrode assembly 42. The electrode assembly 42 is encapsulated in the accommodating cavity. The electrolyte solution impregnates the electrode assembly 42. The number of the electrode assemblies 42 contained in the battery 4 can be one or more, and can be adjusted as required.

The present application further provides an electrical apparatus comprising the above-mentioned secondary battery.

Further, in the above-mentioned electrical apparatus, the secondary battery may exist in the form of a battery cell, or may be further assembled into a battery pack.

Figs. 3 and 4 show a battery pack 1 as an example. The battery pack 1 comprises a battery box and one or more secondary batteries 4 provided in the battery box. The battery box comprises an upper box body 2 and a lower box body 3, the upper box body 2 can cover the lower box body 3, and form a closed space for the secondary battery 4.

A plurality of secondary batteries 4 can be arranged in the battery box in an arbitrary manner.

The above-mentioned secondary battery or the battery pack assembled therefrom may be used as a power source for the electrical apparatus, or may be used as an energy storage unit of the electrical apparatus.

The above-mentioned electrical apparatus can be, but is not limited to, mobile devices (e.g., a mobile phone, a laptop, etc.), electric vehicles (e.g., an all-electric vehicle, a hybrid electric vehicle, a plug-in hybrid electric vehicle, an electric bicycle, an electric scooter, an electric golf cart, an electric truck, etc.), electric trains, ships and satellites, energy storage systems, etc.

Fig. 5 shows an electrical apparatus 5 as an example. The electrical apparatus 5 is an all-electric vehicle, a hybrid electric vehicle, a plug-in hybrid electric vehicle, or the like. In order to meet the requirements of the electrical apparatus 5 for high power and high energy density of secondary batteries, a battery pack can be used.

As another example, the electrical apparatus may be a mobile phone, a tablet, a laptop, etc. The apparatus is generally required to be light and thin, and may use a battery as a power source.

The present invention will be described below in conjunction with specific examples. However, the present invention is not limited to the following examples, and it should be understood that the appended claims have summarized the scope of the present invention. Under the guidance of the concept of the present invention, those skilled in the art should recognize that certain changes made to the various examples of the present invention will be covered by the spirit and scope of the claims of the present invention.

The following are specific examples.

**Specific examples**

(1) Preparation of ionic compounds: ionic compounds (a)-(f) having the following structures were prepared:

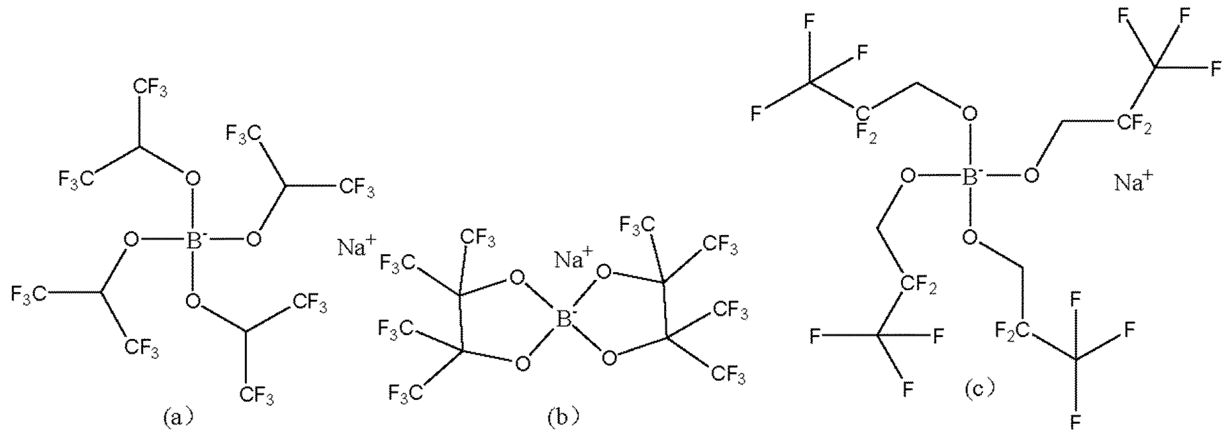

(a) (b) (c)

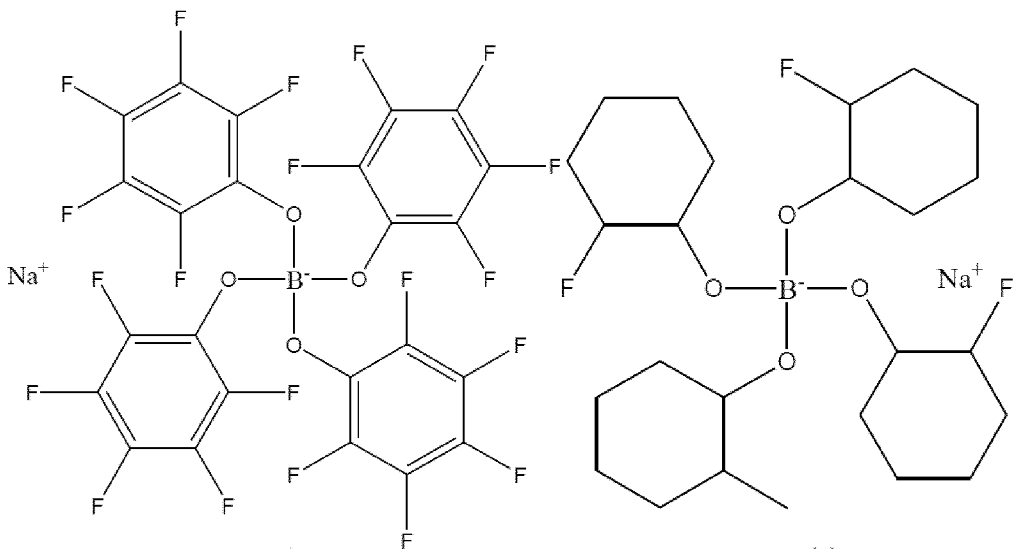

(d) (e)

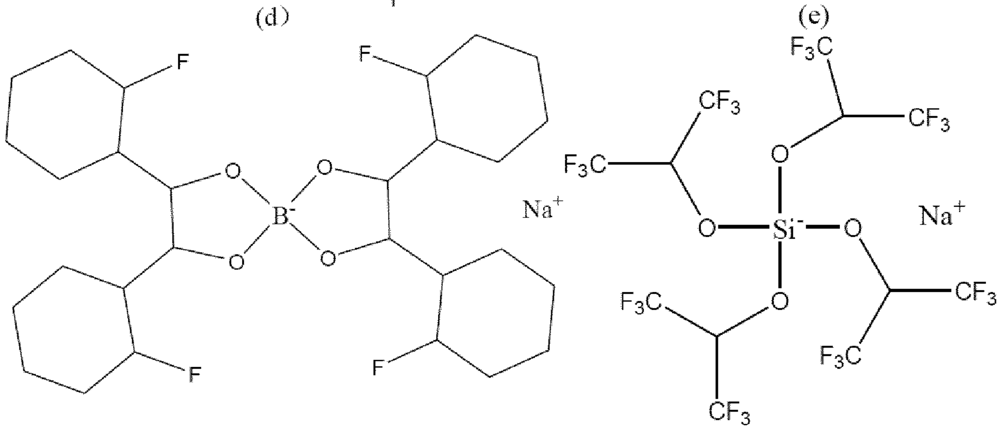

(f) (g)

1. The preparation process of ionic compound (a) was as follows:
Sodium borohydride and excess molar % of hexafluoroisopropanol were heated in 1,2-dimethoxyethane (DME) solvent for reflux reaction for 6 hours, then the solution was cooled, and stirred at 50°C for 16 hours, and then

evaporated to remove most of the solvent to obtain a concentrated solution of the ionic compound (a), and then the concentrated solution of the ionic compound (a) is subjected to precipitation and purification in pentane to obtain the ionic compound (a).

2. The preparation process of ionic compound (b) was as follows:
Referring to the preparation of ionic compound (a), hexafluoroisopropanol was replaced by hexafluoro-2,3-bis (trifluoromethyl)-2,3-butanediol.

3. Preparation of ionic compound (c): referring to the preparation of ionic compound (a), hexafluoroisopropanol was replaced by 2,2,3,3,3-pentafluoro-1-propanol.

4. Preparation of ionic compound (d): referring to the preparation of ionic compound (a), hexafluoroisopropanol was replaced by pentafluorophenol.

5. Preparation of ionic compound (e): referring to the preparation of ionic compound (a), hexafluoroisopropanol was replaced by 2-fluorocyclohexanol.

6. Preparation of ionic compound (f): referring to the preparation of ionic compound (f), referring to the preparation of ionic compound (b), hexafluoroisopropanol was replaced by a compound of the following structure:

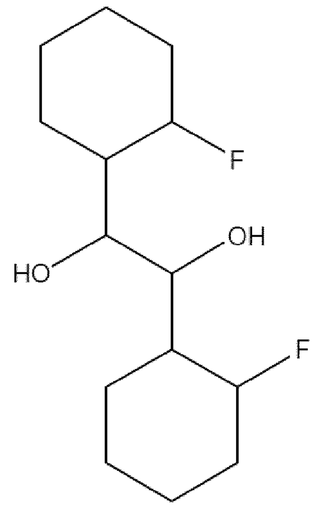

7. Preparation of ionic compound (g): referring to the preparation of ionic compound (h), referring to the preparation of ionic compound (a), sodium borohydride was replaced by sodium orthosilicate.

Examples 1-7

(1) Preparation of positive electrode sheet

A positive electrode slurry was prepared by mixing a positive electrode active material prussian blue-based material $NaNi_{1/3}Fe_{1/3}Mn_{1/3}O_2$, a conductive agent multi-walled carbon nanotube, and a binder polyvinylidene fluoride (PVDF) in a mass ratio of 90:5:5 uniformly with an organic solvent N-methyl pyrrolidone (NMP), wherein the mass content of the binder in the positive electrode slurry was 1wt%.

The positive electrode slurry was then uniformly coated on a positive electrode current collector aluminum foil, oven dried to form a positive electrode active layer, thus a prefabricated electrode sheet was obtained, which was then subjected to cold pressing and slitting to obtain the positive electrode sheet.

(2) Preparation of negative electrode sheet

A negative electrode slurry was prepared by mixing a negative electrode active material hard carbon, a binder styrene butadiene rubber (SBR) and a conductive agent carbon black in a mass ratio of 90:5:5 uniformly with a solvent deionized water; the negative electrode slurry was then coated on a negative electrode current collector copper foil, and after oven drying, cold pressing and slitting to form a negative electrode active layer, the negative electrode sheet was obtained.

(3) Preparation of electrolyte solution

In an argon atmosphere glove box ($H2O<0.1ppm$, $O2<0.1ppm$), a mixed organic solvent was obtained by mixing ethylene carbonate (EC) and propylene carbonate (PC) in a volume ratio of 1:1, and then a fully dried electrolyte was dissolved in the mixed organic solvent to obtain the electrolyte solution, wherein the concentration of the electrolyte was 1mol/L. The electrolytes used in Examples 1-9 were ionic compounds (a)-(h), respectively, and the prepared electrolyte solutions were correspondingly denoted as electrolyte solutions (a)-(g).

The conductivity of the prepared electrolyte solution was measured:
The conductivity $\sigma$ of the electrolyte solution was tested with a model LEICI DDSJ-318 conductivity tester. Firstly, an electrode probe was placed in a standard electrolyte solution for calibration, and then it was placed in the electrolyte solution to be test, measurement was carried out after the ambient temperature was stabilized, the measurement was repeated three times, the average value was taken, and rounded off to retain 1 decimal place. See Table 1 for specific results.

(4) Preparation of separator

A conventional polypropylene (PP) film was used as the separator.

(5) Preparation of sodium-ion battery

The positive electrode sheet, the negative electrode sheet and the separator obtained in the above-mentioned steps were wound and put into a packaging case, and the above-mentioned electrolyte solutions (a)-(g) were respectively injected, the injection volume of the electrolyte solution was 1.8g/Ah, and then the sodium-ion battery was obtained through formation, standing and other processes. The prepared sodium-ion batteries were correspondingly denoted as sodium-ion batteries (a)-(h).

(6) Performance test on the prepared sodium-ion batteries:

1. Impedance measurement of sodium-ion battery:
The sodium-ion battery cell was adjusted to 50% SOC with a 0.33C rate, kept standing at 25°C for 2h, and discharged with a constant current I (4C) for 30s. The impedance R was obtained by calculation according to the initial voltage V1, the terminal voltage V2 and the discharge constant current I: $R= (V1-V2)/I$.
2. Cycling performance test:
At 25°C, the sodium-ion battery cell was charged at a constant current rate of 0.33C to an upper limit cut-off voltage, and then charged at a constant voltage until the current was less than or equal to 0.05C, and then left for 5 minutes, and then discharged at a constant current rate of 1C to a lower limit cut-off voltage, which was a cyclic charge-discharge process, and the discharge capacity of this cycle was denoted as the discharge capacity of the 1st cycle.

The cyclic charge-discharge test was continued for 500 cycles according to the above-mentioned method, the discharge capacity of each cycle was recorded, and the capacity retention rate $X_{1000}$ after 1000 cycles was calculated according to the following formula.

$$X_{1000}(\%) = (\text{discharge capacity at 1000th cycle}/\text{discharge capacity at 1st cycle})\times 100\%.$$

See Table 1 for specific results.

Examples 8-11

Examples 8-11 were essentially the same as Example 1, except that in the preparation of the electrolyte solutions, the ionic compound (b) was selected as the electrolyte, and the concentration of the ionic compound (b) was regulated, so that electrolyte solutions with different concentrations were obtained.

The remaining steps and conditions were the same as in Example 1. See Table 1 for specific results.

Comparative example 1

Comparative example 1 was essentially the same as the Examples, except that in the preparation of the electrolyte solution of Comparative example 1, the ionic compound was replaced by equimolar $NaClO_4$, and the injection volume of the electrolyte solution was 2g/Ah.
The remaining steps and conditions were the same as in Example 1.

Comparative example 2

Comparative example 2 was essentially the same as the Examples, except that in the preparation of the electrolyte solution of Comparative example 1, the ionic compound was replaced by equimolar $NaPF_6$, and the injection volume of the electrolyte solution was 2g/Ah.
The remaining steps and conditions were the same as in Example 1.
See Table 1 for the related physical parameters and test results in various Examples and Comparative examples.

Table 1

| | Electrolyte | Injection volume of electrolyte solution (g/Ah) | Electrolyte concentration (mol/L) | Conductivity σ (mS/cm) | Impedance R (mΩ) | $X_{1000}$ (%) |
|---|---|---|---|---|---|---|
| Example 1 | Ionic compound (a) | 1.8 | 1.1 | 7.2 | 37 | 80.8% |
| Example 2 | Ionic compound (b) | 1.8 | 1.1 | 7.8 | 32 | 84.6% |
| Example 3 | Ionic compound (c) | 1.8 | 1.1 | 7.6 | 35 | 82.2% |
| Example 4 | Ionic compound (d) | 1.8 | 1.1 | 7.3 | 35 | 83.1% |
| Example 5 | Ionic compound (e) | 1.8 | 1.1 | 6.4 | 32 | 84.9% |
| Example 6 | Ionic compound (f) | 1.8 | 1.1 | 6.0 | 33 | 85.1% |
| Example 7 | Ionic compound (g) | 1.8 | 1.1 | 5.1 | 55 | 61.50% |
| Example 8 | Ionic compound (b) | 1.8 | 0.3 | 4.7 | 58 | 49.60% |
| Example 9 | Ionic compound (b) | 1.8 | 0.9 | 7.0 | 38 | 78.50% |
| Example 10 | Ionic compound (b) | 1.8 | 1.3 | 8.1 | 36 | 79.10% |
| Example 11 | Ionic compound (b) | 1.8 | 1.4 | 8.2 | 36 | 78.10% |

(continued)

| | Electrolyte | Injection volume of electrolyte solution (g/Ah) | Electrolyte concentration (mol/L) | Conductivity σ (mS/cm) | Impedance R (mΩ) | $X_{1000}$ (%) |
|---|---|---|---|---|---|---|
| Comparative example 1 | $NaClO_4$ | 2 | 1.1 | 5.1 | 40 | 74% |
| Comparative example 2 | $NaPF_6$ | 2 | 1.1 | 6.7 | 38 | 78% |

From the analysis of the data in Table 1, it can be seen that when the ionic compound of the present application is used as an electrolyte to prepare an electrolyte solution, the impedance of the prepared secondary battery can be reduced, and the cycling performance of the secondary battery can be improved.

Finally, it should be noted that the above examples are merely used for illustrating rather than limiting the technical solutions of the present application. Although the present application has been described in detail with reference to the above various examples, those of ordinary skill in the art should understand that the technical solutions specified in the above various examples can still be modified, or some or all of the technical features therein can be equivalently substituted; and such modifications or substitutions do not make the essence of the corresponding technical solutions depart from the scope of the technical solutions of the various examples of the present application, which shall fall within the scope of the claims and the specification of the present application. In particular, the technical features mentioned in the various examples can be combined in any manner as long as there is no structural conflict. The present application is not limited to the specific examples disclosed herein, but rather includes all technical solutions falling within the scope of the claims.

## Claims

1. An ionic compound represented by formula (1):

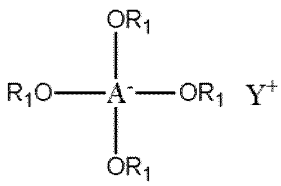

(1)

,

wherein each $R_1$ is independently selected from alkyl having 1-10 carbon atoms substituted with fluorine or aryl having 6-30 carbon atoms substituted with fluorine, respectively;
wherein any two adjacent $-OR_1$ groups and $A^-$ are capable of forming a ring, with a carbon atom in $R_1$ being a site of attachment;
$A^-$ represents $B^-$ or $Si^-$, and $Y^+$ represents a sodium ion or a potassium ion.

2. The ionic compound of claim 1, wherein the ionic compound is represented by formula (1-1) or formula (1-2):

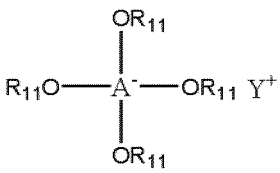

(1-1)

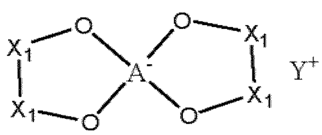

(1-2)

;

wherein each Rn is independently selected from alkanyl having 1-5 carbon atoms substituted with fluorine,

cycloalkyl having 3-10 carbon atoms substituted with fluorine or aryl having 6-30 carbon atoms substituted with fluorine, respectively;
each $X_1$ is independently selected from $CR_{12}R_{12}$, respectively, and each $R_{12}$ is independently selected from F, or alkanyl having 1-5 carbon atoms, or cycloalkyl having 3-10 carbon atoms, or aryl having 6-30 carbon atoms, or alkanyl having 1-5 carbon atoms substituted with fluorine, or cycloalkyl having 3-10 carbon atoms substituted with fluorine, or aryl having 6-30 carbon atoms substituted with fluorine, respectively, and at least one $X_1$ contains a fluorine atom.

**3.** The ionic compound of claim 2, wherein each Rn is independently selected from alkanyl having 1-4 carbon atoms substituted with fluorine, cycloalkyl having 3-6 carbon atoms substituted with fluorine or aryl having 6-15 carbon atoms substituted with fluorine, respectively;
each $R_{12}$ is independently selected from alkanyl having 1-4 carbon atoms substituted with fluorine, or cycloalkyl having 3-6 carbon atoms substituted with fluorine or aryl having 6-30 carbon atoms substituted with fluorine, respectively.

**4.** The ionic compound of any one of claims 2-3, wherein in formula (1-1), at least one Rn is selected from cycloalkyl having 3-6 carbon atoms substituted with fluorine or aryl having 6-15 carbon atoms substituted with fluorine;
in formula (1-2), at least one $R_{12}$ is selected from cycloalkyl having 3-6 carbon atoms substituted with fluorine or aryl having 6-15 carbon atoms substituted with fluorine.

**5.** The ionic compound of claim 4, wherein the cycloalkyl having 3-6 carbon atoms substituted with fluorine satisfies at least one of the conditions (a)-(b):

(a) the cycloalkyl having 3-6 carbon atoms substituted with fluorine has a molecular weight of not more than 200g/mol;
(b) the cycloalkyl having 3-6 carbon atoms substituted with fluorine is selected from any one of cyclopropanyl substituted with fluorine, cyclobutanyl substituted with fluorine, cyclopentanyl substituted with fluorine, and cyclohexanyl substituted with fluorine.

**6.** The ionic compound of any one of claims 4-5, wherein the aryl having 6-15 carbon atoms substituted with fluorine is selected from any one of phenyl substituted with fluorine and naphthyl substituted with fluorine.

**7.** The ionic compound of any one of claims 2-6, wherein each $R_{11}$ at least contains one fluorine atom;

optionally, each $R_{11}$ at least contains two fluorine atoms;
optionally, each $R_{11}$ at least contains three fluorine atoms.

**8.** The ionic compound of any one of claims 2-7, wherein each $R_{12}$ at least contains one fluorine atom;

optionally, each $R_{12}$ at least contains two fluorine atoms;
optionally, each $R_{12}$ at least contains three fluorine atoms.

**9.** The ionic compound of any one of claims 1-8, wherein $Y^+$ is a sodium ion.

**10.** Use of the ionic compound of any one of claims 1-9 as an electrolyte salt.

**11.** The use of claim 10, wherein the use is the use of the ionic compound as an electrolyte salt in the preparation of a secondary battery.

**12.** An electrolyte solution, having a component comprising the ionic compound of any one of claims 1-9.

**13.** The electrolyte solution of claim 12, wherein the concentration of the ionic compound in the electrolyte solution is 0.3mol/L-1.4mol/L;
optionally, the concentration of the ionic compound is 0.9mol/L-1.3mol/L.

**14.** The electrolyte solution of claim 12 or 13, wherein the conductivity of the electrolyte solution at 25 °C is 6mS/cm-14mS/cm;
optionally, the conductivity of the electrolyte solution at 25 °C is 6.5mS/cm-13mS/cm.

**15.** A secondary battery, comprising the electrolyte solution of any one of claims 12-14.

**16.** An electrical apparatus, comprising the secondary battery of claim 15.

FIGURES

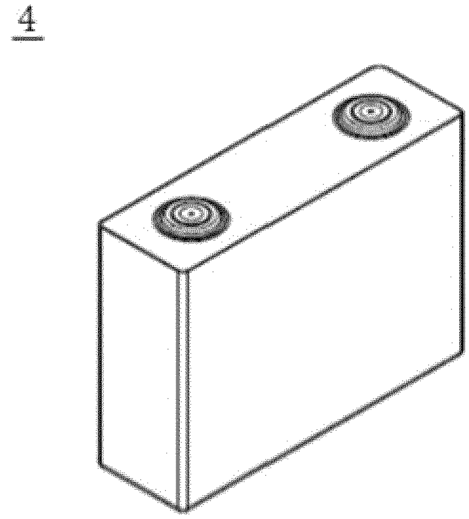


FIG. 1

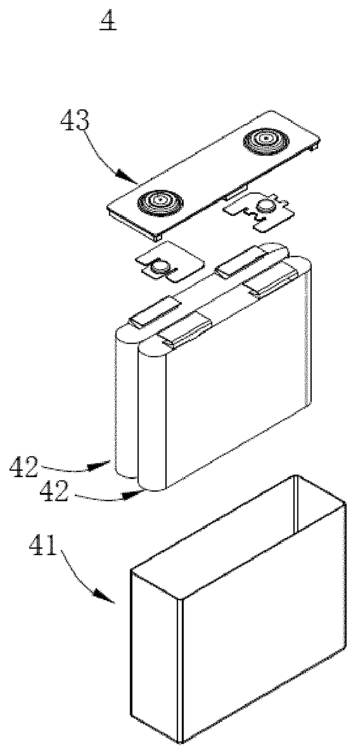


FIG. 2

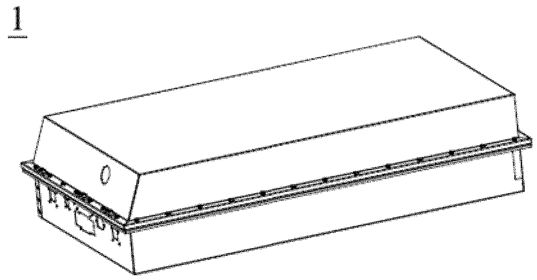


FIG. 3

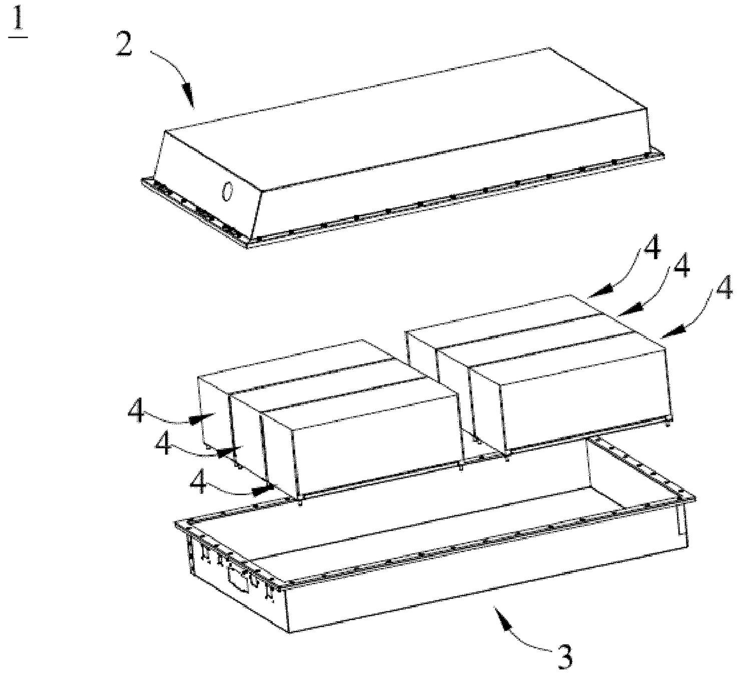


FIG. 4

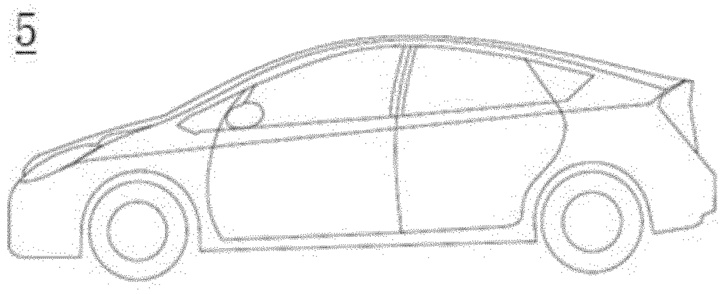


FIG. 5

## INTERNATIONAL SEARCH REPORT

International application No.
**PCT/CN2022/116986**

**A. CLASSIFICATION OF SUBJECT MATTER**

H01M10/0566(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电解液, 电解质溶液, 硼, 硼酸, 锂, 钠, 钾, 盐, 循环性能, electrolyte, boron, borate, lithium, sodium, potassium, salt, cycling, cycle, performance

**C. DOCUMENTS CONSIDERED TO BE RELEVANT**

| Category* | Citation of document, with indication, where appropriate, of the relevant passages | Relevant to claim No. |
|---|---|---|
| X | CN 112968213 A (ZHUHAI COSMX BATTERY CO., LTD.) 15 June 2021 (2021-06-15) description, paragraphs 0005-0072 | 1-16 |
| A | CN 110957530 A (DONGGUAN VEKEN BATTERY CO., LTD.) 03 April 2020 (2020-04-03) entire document | 1-16 |
| A | CN 112687955 A (NINGDE AMPEREX TECHNOLOGY LTD.) 20 April 2021 (2021-04-20) entire document | 1-16 |
| A | CN 109873204 A (SHANSHAN ADVANCED MATERIALS (QUZHOU) CO., LTD.) 11 June 2019 (2019-06-11) entire document | 1-16 |
| A | CN 112803067 A (GUANGZHOU TINCI MATERIALS TECHNOLOGY CO., LTD.) 14 May 2021 (2021-05-14) entire document | 1-16 |
| A | JP 2007258103 A (MITSUBISHI CHEMICALS CO., LTD.) 04 October 2007 (2007-10-04) entire document | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 May 2023** | **09 May 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2022/116986**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **1 (in part)**
because they relate to parts of the international application that do not comply with the prescribed requirements to such an extent that no meaningful international search can be carried out, specifically:

With regard to the parallel solution of $A^-$ representing $Si^-$ in claim 1, when $A^-$ represents $Si^-$, Si contained in a compound of claim 1 is connected with four saturated groups and cannot form a silicon-containing anion and an ionic compound as shown in formula (1) of claim 1. Therefore, the parallel solution of $A^-$ representing $Si^-$ in claim 1 is substantially unclear, so that no meaningful search can be performed.

3. ☐ Claims Nos.:
because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.
**PCT/CN2022/116986**

| Patent document cited in search report | | | Publication date (day/month/year) | Patent family member(s) | | | Publication date (day/month/year) |
|---|---|---|---|---|---|---|---|
| CN | 112968213 | A | 15 June 2021 | None | | | |
| CN | 110957530 | A | 03 April 2020 | None | | | |
| CN | 112687955 | A | 20 April 2021 | None | | | |
| CN | 109873204 | A | 11 June 2019 | None | | | |
| CN | 112803067 | A | 14 May 2021 | None | | | |
| JP | 2007258103 | A | 04 October 2007 | JP | 5168807 | B2 | 27 March 2013 |

Form PCT/ISA/210 (patent family annex) (July 2022)